# EUROPÄISCHE PATENTANMELDUNG

(11) **EP 0 908 662 A1**
(43) Veröffentlichungstag der Anmeldung: **14.04.1999**
(21) Anmeldenummer: 97117377.8
(22) Anmeldetag: 08.10.1997
(51) Int. Cl.: F16L 59/02

(54) **Explosionsschutz-Wärmedämmung**

(71) Anmelder: ETIS AG, 9053 Teufen (CH)
(72) Erfinder: Wirth, Anton, 9056 Gais (CH); Doumont, André, Rye, NH 03870 (US)
(74) Vertreter: Stocker, Kurt

(57) **Zusammenfassung**

Um eine Wärmeübertragungsleitung (1) ist eine vierschichtigen Explosionsschutz-Wärmedämmung (2) angeordnet, deren innerste Schicht von zylindermantelförmigen, inneren Isolationselementen (4) gebildet wird. Die an die innerste Schicht anschliessende zweite Schicht umfasst im wesentlichen zylindermantelförmige, befüllbare Presselemente (9). Zum Befüllen ist für jedes Presselement (9) mindestens eine Anschlussleitung (10) vorgesehen, wobei die Presselemente (9) nach der vollständigen Montage der Wärmedämmung entweder mit einem sich beim Verfestigen ausdehnenden Fluid oder mit einem druckbeaufschlagten Gas befüllt werden. Auf die Schicht mit den Presselementen (9) folgt eine Schicht mit zylinderhalbmantelförmigen, äusseren Isolationselementen (14), die mit halbringförmigen Silikatplattenelementen (19) stirnseitig abgeschlossen sind. Die Silikatplattenelemente (19) erstrecken sich radial von Anlegebereichen (21) der inneren Isolationselemente (4) zu den äusseren Isolationselementen (14) und sind dabei stirnseitig zwischen Presselementen (9) angeordnet. Um die äusseren Isolationselemente (14) sind Formelemente (24) angeordnet und miteinander verbunden, so dass die nach dem Befüllen der Presselemente (9) von diesen ausgehende Presswirkung zu einer Komprimierung der inneren und der äusseren Isolationselemente (4, 14), sowie zum Zusammenpressen von aneinander anschliessenden Silikatplattenelementen (19) führt. Die Hüllen der Isolationselemente (4, 14) und die Presselemente (9) sind aus Glasfaserstoff gebildet, der für die inneren Isolationselemente (4) mit V4A-Draht verstärkt und für die äusseren Isolationselemente (14) und die Presselemente (9) silikonisiert ist. In die Hüllen der Isolationselemente (4, 14) sind Teile aus Silikatfasermatte eingesetzt. Diese Wärmedämmung hat gute thermische und dichtende Isolationseigenschaften und ist einfach montierbar. Zudem hat sie auch bei hohen Temperaturen des zu isolierenden Bauteils eine hohe Lebensdauer. Wärmebrücken, Wärmenester, Gaseintrittskanäle und ein durch die Gasdurchlässigkeit der Isolierung bedingtes Atmen können weitgehend verhindert werden.

## Beschreibung

Die Erfindung bezieht sich auf Explosionsschutz-Wärmedämmungen nach dem Oberbegriff des Anspruches 1. Solche Wärmedämmungen werden für Wärmequellen, Apparate und insbesondere für Wärme-Übertragungsleitungen benötigt, um diese thermisch zu Isolieren und um explosionsfähige Gasgemische von heissen Stellen fernzuhalten.

Aus dem Stande der Technik ist keine echte Explosionsschutz-Wärmedämmung bekannt. Es gibt kein Isoliersystem das speziell für Wärme transportierende Leitungen, Armaturen, sowie für Apparate in explosionsgefährdeten Bereichen entwickelt wurde und sowohl den Wärmetransport von der heissen Oberfläche durch die Isolierung nach aussen stark reduziert als auch das Eindringen von explosionsfähigen Gasgemischen gegen die heisse Oberfläche verhindert. Um eine Sicherung zu erzielen, werden Überwachungssysteme vorgeschlagen, die etwa mittels Temperaturfühlern in der Isolierung die Temperatur überwachen und bei zu hoher gemessener Temperatur Alarm auslösen, bzw. die Anlage automatisch ausschalten. Ein solches Sicherheitssystem ist teuer und kann nie eine flächendeckende Temperaturkontrolle gewährleisten, weil bereits eine einzelne lokale Wärmeleitungsbrücke oder ein lokaler durch die Isolierung führender, gasdurchlässiger Kanal, bzw. ein mit Gas befüllbares Nest, zu einer Zündung, bzw. einem Zünddurchschlag führen kann. Ein Sicherheitskonzept mit einer äusserst sensiblen Temperatur- und gegebenenfalls Gasüberwachung kann insbesondere bei, aufgrund betriebsbedingter Temperaturschwankungen, gealterter Isolierung zu häufigen Betriebsunterbüchen und/oder zu einem Schadensereignis führen.

Die bei einem Unterbruch des Wärmetransportes, bzw. der Wärmeproduktion, eintretende Abkühlung der Leitungs- bzw. Apparateoberfläche muss langsam erfolgen, um ein unerwüschtes Eintreten von zündfähigen Gasgemischen zu verhindern. Die Wärmedämmung soll vorzugsweise die Schwadensicherheitsnormen aus dem Elektrobereich erfüllen können.

Der vorliegenden Erfindung liegt daher die Aufgabe zugrunde, eine Wärmedämmung zu schaffen, die gute thermische und dichtende Isolationseigenschaften hat, einfach montierbar ist und zudem auch bei hohen Temperaturen des zu isolierenden Bauteils eine hohe Lebensdauer hat. Wärmebrücken, Wärmenester, Gaseintrittskanäle und ein durch die Gasdurchlässigkeit der Isolierung bedingtes Atmen müssen weitgehend verhindert werden. Die Aussentemperatur der Isolierung muss auf eine für die jeweiligen Gasgemische zulässige Maximaltemperatur reduzierbar sein.

Diese Aufgabe wird durch die Merkmale des Anspruches 1 gelöst. Die abhängigen Ansprüche beschreiben bevorzugte Ausführungsformen.

Da eine Wärmedämmung jeweils aus Elementen zusammengestellt wird, muss gewährleitet sein, dass sowohl die Elemente, als auch die Bereiche in denen die Elemente aneinander anschliessen die gewünschten Wärmedämmungs- und Gasdichtigkeitseigenschaften haben. Beim Lösen der Aufgabe wurde erkannt, dass die Warmedämmung in der Richtung von der heissen Oberfläche weg zumindest drei Schichten umfassen muss. Eine innerste Schicht wird von inneren Isolationselementen gebildet, die beschädigungsfrei mit hohen Temperaturen in Kontakt bringbar und komprimierbar sind. Eine äusserste Schicht wird von Formelementen gebildet, die die äussere Berandung der Wärmedämmung im wesentlichen festlegen, so dass befüllbare, hüllenförmige Presselemente, die in einer Schicht zwischen den Formelementen und den inneren Isolationselementen angeordnet sind, durch die Befüllung in der montierten Lage eine Verdrängung von Freiräumen und ein Komprimieren des Isoliermaterials der inneren Isolationselemente erzielbar machen. Die Befüllung erfolgt mit einem sich bei der Verfestigung ausdehnenden Mittel, vorzugsweise einem Schaum, insbesondere PUR-Schaum, oder mit einem druckbeaufschlagten Fluid, vorzugsweise einem Gas, insbesondere Stickstoff. Bei der Verwendung eines druckbeaufschlagten Gases ist es zweckmässig eine Drucküberwachung vorzusehen, so dass bei einem Unterschreiten eines minimalen Druckwertes zur Druckerhöhung Gas nachgefüllt werden kann. Indem die Hüllen der Presselemente im wesentlichen gasdicht, insbesondere aus silikonisiertem Glasfaserstoff, gegebenenfalls aus Polycarbonat oder aus beschichtetem Kohlefaserstoff, ausgebildet sind und die Bereiche zwischen den Presselementen aufgrund der volumenerhöhenden oder druckbeaufschlagten Befüllung zusammengepresst werden, wird ein Durchtritt von explosionsfähigem Gasgemisch gegen die heisse Oberfläche im wesentlichen verunmöglicht. Durch das Komprimieren der inneren Isolationselemente werden Wärmebrücken bildende Freiräume in und zwischen den inneren Isolationselementen verhindert. Die Formelemente gewährleisten durch ihre Anordnung im wesentlichen in fester Lage zur heissen Oberfläche eine äussere Berandung, so dass die Presswirkung der Presselemente zur beschriebenen Dichtung und zur Verdrängung von Freiräumen führt.

Zur Erzielung der Formstabilisierung werden die Formelemente vorzugsweise aus ringförmig um die zu isolierenden Bauteile anzuordnenden, miteinander verbindbaren festen Schalenelementen ausgebildet. Bei Übertragungsrohren werden insbesondere Bleche in der Form von Halbzylindermänteln paarweise miteinander verbunden. Um zwischen den Blechen und den ersten Isolationselementen etwa einen ringförmigen Raum für die noch nicht befüllten Presselemente freizuhalten, sind gegebenenfalls Distanzhalter, insbesondere in der Form von halbringförmigen Silikatplattenelementen radial zwischen Anlegebereichen der inneren Isolationselemente und den Formelementen und stirnseitig zwischen Presselementen angeordnet. Wenn - zumindest während dem Befüllen der Presselemente - nicht mit von aussen auf die Formelemente wirkenden Kräften gerechnet werden muss, so können die Formelemente gegebenenfalls analog zu Schlauch-Mantel-Anordnungen bei Rädern als verformbare Mantelteile, die in der zusammengestellten Anordnung im wesentlichen nicht nach aussen dehnbar sind, gegebenenfalls lediglich aus Glasfaserstoff, ausgebildet werden. Nebst flächig miteinander verbundener Formelemente, sind auch voneinander beabstandete ringförmige Formelemente möglich, wenn die Aussenseite der Presselemente oder vorzugsweise eine um die Presselemente angeordnete Schicht eine unerwüschte Ausdehnung zwischen den ringförmigen Formelementen verhindert und/oder der Abstand zwischen den ringförmigen Formelementen genügend klein ist.

Eine besonders bevorzugte Ausführungsform sieht zwischen den Presselementen und den Formelementen äussere Isolationselemente vor, die auch der Presswirkung der Presselemente ausgesetzt sind, so dass sowohl innerhalb als auch ausserhalb der Schicht mit den Presselementen aufgrund der Presswirkung Wärmebrücken bildende Freiräume verhindert werden können. Sowohl die inneren als auch die äusseren Isolationselemente umfassen vorzugsweise eine Hülle aus Glasfaserstoff, gegebenenfalls aus Polycarbonat oder aus beschichtetem Kohlefaserstoff, und in der Hülle Isoliermaterial, wobei das Isoliermaterial vorzugsweise schichtförmig ist und insbesondere aus Silikatfasermatten, gegebenenfalls aber aus Kohlefasermatten, besteht. Um die Glasfaserhüllen der inneren Isolationselemente beschädigungsfrei auch an Oberflächen mit sehr hohen Temperaturen anlegen zu können, sind zumindest deren an die heisse Oberfläche anliegenden Bereiche, gegebenenfalls aber die ganzen Hüllen, vorzugsweise mit Draht, insbesondere V4A-Draht verstärkt bzw. durchwoben. Damit die äusseren Isolationselemente zur Gasdichtheit der Wärmedämmung beitragen, sind vorzugsweise zumindest die gegen die Formelemente gerichteten Bereiche der Hüllen, gegebenenfalls aber die gesamten Hüllen, der äusseren Isolationselemente zumindest einseitig, vorzugsweise aber zweiseitig, mit Silikon beschichtet. Die Gasdichtheit wird insbesondere auch dadurch erhöht, dass die Formelemente als an den Randbereichen formschlüssig aneinander anlegbare Bleche, vorzugsweise aus Peraluman 150, ausgebildet sind.

Die Zeichnungen erläutert die erfindungsgemässe Wärmedämmung anhand eines Ausführungsbeispieles. Dabei zeigt
- Fig. 1: einen Längsschnitt A-A gemäss Fig. 2 durch eine Explosionsschutz-Wärmedämmung einer kreiszylindrischen Übertragungsleitung
- Fig. 2: einen Querschnitt B-B gemäss Fig. 1 durch eine Explosionsschutz-Wärmedämmung einer kreiszylindrischen Übertragungsleitung
- Fig. 3: einen Querschnitt C-C gemäss Fig. 1 durch eine Explosionsschutz-Wärmedämmung einer kreiszylindrischen Übertragungsleitung

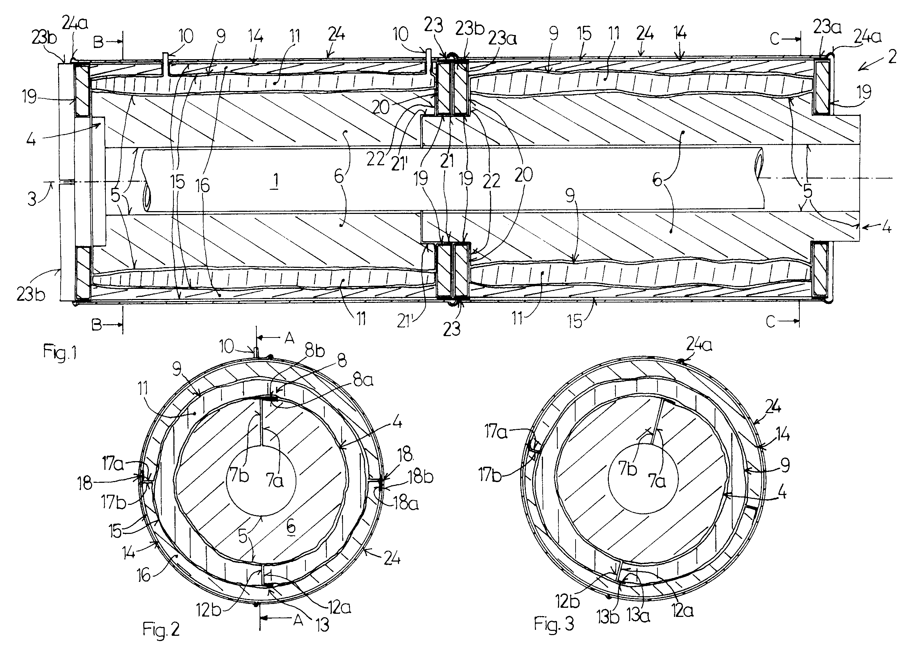

Die Fig. 1 zeigt eine entlang einer Achse 3 verlaufende Wärmeübertragungsleitung 1 mit einer vierschichtigen Explosionsschutz-Wärmedämmung 2, wobei jede Schicht aus entlang der Achse 3 neben einander angeordneten Elementen besteht. Die innerste Schicht wird, wie in der Zusammenschau aus Fig. 2 und 3 erkennbar ist, von zylindermantelförmigen, inneren Isolationselementen 4 gebildet, die je aus einer inneren Hülle 5 und aus einer diese ausfüllenden Silikatfasermatte 6 bestehen. Die inneren Hüllen 5 bestehen vorzugsweise aus Glasfaserstoff, wobei etwa zumindest der an die zu isolierende Oberfläche angrenzende Bereich der Hülle, vorzugsweise aber die gesamte Hülle, mit Metalldraht, insbesondere V4A-Draht, verstärkt bzw. durchwoben ist. Damit die inneren Isolationselemente 4 auf die Leitung 1 aufgesetzt werden können, sind sie in Achsrichtung entlang einer radial ausgerichteten Trennfläche unterbrochen, so dass zwei einander zugewendete, radiale Berandungsflächen 7a, 7b ausgebildet sind. Um die radialen Berandungsflächen 7a,7b von auf die Leitung 1 aufgesetzten inneren Isolationselementen 4 miteinander zu verbinden, bzw. in Kontakt zu halten, sind entlang der Unterbrechungen verlaufende Klettverbindungen 8 vorgesehen. Um die Figuren übersichtlich zu halten, sind alle nachfolgend beschriebenen, in Achsrichtung verlaufenden Klettverbindungen nur in den Querschnitten (Fig.2 und 3) dargestellt. Die Klettverbindungen 8 umfassen ein Klettband 8a bzw. ein Flauschband auf der Aussenseite des Isolationselementes 4 direkt an die Berandungsfläche 7a anschliessend und einen an der Aussenseite bei der Berandungsfläche 7b befestigten Hüllenlappen 8b mit nach innen gerichtetem Klettband. Analog zu den axial verlaufenden Klettverbindungen sind gegebenenfalls auch stirnseitig angeordnete und radial verlaufende Klettverbindungen vorgesehen. Eine gute Abdichtung wird erzielt, wenn die Berandungsflächen 7a, 7b dicht aneinander anliegen und insbesondere, wenn die Klettverbindungen beispielsweise mit Silikonkitt abgedichtet werden.

Die an die innerste Schicht anschliessende zweite Schicht umfasst hüllenförmige, befüllbare Presselemente 9. In der dargestellten Ausführungsform sind die Presselemente 9 analog ausgeformt, wie die Hüllen 5 der inneren Isolationselemente 4. Das heisst die Presselemente 9 sind im montierten und gefüllten Zustand im wesentlichen zylindermantelförmig. Damit die Presselemente 9 bei der Montage auf die inneren Isolationselemente 4 aufgesetzt werden können, sind sie in Achsrichtung entlang einer radial ausgerichteten Trennfläche unterbrochen, so dass zwei einander zugewendete, radiale Berandungsflächen 12a, 12b ausgebildet sind. Um die radialen Berandungsflächen 12a,12b von auf innere Isolationselemente 4 aufgesetzten Presselementen 9 miteinander zu verbinden, bzw. in Kontakt zu halten, sind entlang der Unterbrechungen verlaufende Klettverbindungen 13 vorgesehen. Die Klettverbindungen 13 umfassen ein Klettband 13a, bzw. ein Flauschband, auf der Aussenseite des Presselementes 9 direkt an die Berandungsfläche 12a anschliessend und einen an der Aussenseite bei der Berandungsfläche 7b befestigten Hüllenlappen 13b mit nach innen gerichtetem Klettband. Um die gewüschte Gasdichtheit zu erzielen, sind die Presselemente vorzugsweise aus silikonisiertem Glasfaserstoff und gegebenenfalls wird die Klettverbindung 13 mit einem Silikonkitt abgedichtet. Um eine Labyrinth-Anordnung zu erzielen sind die Klettverbindungen 8 und 13 der inneren Isolationselemente 4 bzw. der Presselemente 9 gegeneinander versetzt, vorzugsweise um 180° um die Achse 3 verdreht, angeordnet.

Zum Befüllen ist für jedes Presselement 9 mindestens eine Anschlussleitung 10, vorzugsweise aber sind mindestens zwei Anschlussleitungen 10, vorgesehen. Gemäss den Fig. 1 bis 3 sind die dargestellten Presselemente 9 mit ausgehärtetem PUR-Schaum 11 gefüllt, der sich aus einem zweikomponentigen Fluid bildet. Beim Einfüllen des Fluids durch eine Anschlussleitung 10 muss gegebenenfalls durch die zweite Anschlussleitung 10 Luft austreten können. Bei der Befüllung mit einem druckbeaufschlagten Gas genügt eine Anschlussleitung pro Presselement. Um die Presswirkung der Presselemente 9 mit einer aushärtenden Befüllung zu erzielen, werden die Presselemente 9 so mit dem schaumbildenden Fluid befüllt, dass sie anfänglich lediglich den für sie vorgesehenen Freiraum ausfüllen. Beim Aushärten dehnt sich der PUR-Schaum aus und das von den Presselementen 9 beanspruchte Volumen wird vergrössert. Damit sich der Schaum in den Presselementen 9 ausdehnen kann sind diese gegebenenfalls aus elastischem Material gebildet, vorzugsweise aber sind sie etwas überdimensioniert, bzw. an die ausgedehnte Form angepasst.

Im dargestellten Beispiel folgt auf die Schicht mit den Presselementen 9 eine Schicht mit zylinderhalbmantelförmigen, äusseren Isolationselementen 14, die je aus einer äusseren Hülle 15 und aus einer diese ausfüllenden Silikatfasermatte 16 bestehen. Die äusseren Hüllen 15 bestehen vorzugsweise aus Glasfaserstoff, wobei zumindest die gegen aussen gerichteten Bereiche der äusseren Hülle 15, gegebenenfalls aber die gesamte äussere Hülle 15, zumindest einseitig, vorzugsweise aber zweiseitig, mit Silikon beschichtet ist. Damit die äusseren Isolationselemente 14 so aufgesetzt werden können, dass für die noch nicht befüllten Presselemente 9 ein Freiraum bleibt, sind den äusseren Isolationselementen 14 an den Stirnseiten halbringförmige Silikatplattenelemente 19 zugeordnet. Die Silikatplattenelemente 19 erstrecken sich radial von Anlegebereichen 21 der inneren Isolationselemente 4 zu den äusseren Isolationselementen 14 und sind dabei stirnseitig zwischen Presselementen 9 angeordnet. Die Silikatplattenelemente 19 sind vorzugsweise in Teilhüllen 20 der äusseren Isolationselementen 14 eingesetzt. Es wäre auch möglich die Silikatplattenelemente 19 lediglich an den Stirnseiten der äusseren Hüllen 15 zu befestigen. Um die Silikatplattenelemente 19 in Achsrichtung an den gewünschten Positionen zu halten, sind die Anlegebereiche 21 beidseits von radialen Anschlagflächen 22 der inneren Isolationselemente 4 berandet, an denen die Silikatplattenelemente 19 in Achsrichtung anliegen. Nach dem Befüllen der Presselemente 9 werden die aneinander anliegenden Silikatplattenelemente 19 der in Achsrichtung aneinander anschliessenden äusseren Isolationselementen zusammengepresst, so dass die radiale Spaltfläche zwischen den Silikatplattenelementen 19 bzw. deren Hüllenteilen 20 im wesentlichen verschwindet, bzw. dicht wird.

Um zu gewährleisten, dass auch zwischen in Achsrichtung aneinander anschliessenden inneren Isolationselementen 4 keine radialen Spaltdurchlässe auftreten, sind die aneinander anliegenden Stirnseiten im Längsschnitt stufenförmig ausgebildet. Dabei liegt ein Endbereich des Anlegebereich 21 des einen Elementes 4 dicht an einer Innenfläche 21' eines stirnseitig vorstehenden Teilringes des anderen Elementes 4 an. Die Kontaktfläche zwischen den Elementen 4 besteht somit aus einem im wesentlichen senkrecht zur Achse 3 ausgerichteten Flächenteil und einem Zylindermantelteil. Es versteht sich von selbst, dass nebst der dargestellten auch andere Labyrinthanordnungen vorgesehen werden können. Im dargestellten Ausführungsbeispiel sind zwei verschiedene Ausbildungen der inneren Isolationselemente 4 vorgesehen. Eine erste Ausbildung umfasst auf beiden Stirnseiten einen nach aussen gerichteten Anlegebereich 21 und eine zweite auf beiden Stirnseiten eine entsprechende Innenfläche 21'. Die erste Ausführung wird mit Feder und die zweite mit Nut bezeichnet, so dass entlang einer Leitung 1 abwechselnd ineinander gestossene Nut- und Federelemente folgen. Es wäre auch möglich eine Ausführung vorzusehen, die an der einen Stirnseite nut- und an der anderen federförmig ausgebildet ist.

Analog zu den in Achsrichtung verlaufenden Klettverbindungen 8 der inneren Isolationselemente 4 sind auch entlang von in radialer und in Achsrichtung verlaufenden Berandungsflächen 17a,17b der äusseren Isolationselemente 14 Klettverbindungen 18 ausgebildet. Die Klettverbindungen 18 umfassen ein in Achsrichtung verlaufendes Klettband 18a, bzw. ein Flauschband, auf der Aussenseite des einen Isolationselementes 14 direkt an die Berandungsfläche 17a anschliessend und einen an der Aussenseite des anderen Isolationselementes 14 bei der Berandungsfläche 17b befestigten Hüllenlappen 18b mit nach innen gerichtetem Klettband. Eine gute Abdichtung wird erzielt, wenn die Berandungsflächen 17a, 17b dicht aneinander anliegen und insbesondere, wenn die Klettverbindungen beispielsweise mit Silikonkitt abgedichtet werden. Um zu verhindern, dass zwischen den Berandungsflächen 7a, 7b sowie 12a, 12b und 17a, 17b miteinander verbundene Spaltdurchlässe entstehen können, sind die beiden Berandungsflächenpaare 17a, 17b je, vorzugsweise um 90°, zu den Berandungsflächen 12a, 12b verdreht angeordnet. Die Berandungsflächen 7a, 7b sowie 12a, 12b und 17a, 17b von in Achsrichtung aneinander anschliessenden Elementen sind vorzugsweise wenig gegeneinander verdreht, was aus den Fig. 2 und 3 hervorgeht. Durch die Presswirkung der Presselemete 9 werden die zylindermantelförmigen Kontaktbereiche zwischen den inneren Isolationselementen 4 und den Presselementen 9, sowie zwischen den äusseren Isolationselementen 14 und den Presselementen 9 dicht zusammengepresst, so dass keine Spaltverbindungen von der Leitung 1 entlang von Berandungsflächen 7a, 7b; 12a, 12b; 17a, 17b und zylindermantelförmigen Kontaktbereichen möglich sind.

Um die Elemente der Wärmedämmung in Achsrichtung miteinander zu verbinden und die Möglichkeit von Spaltverbindungen zwischen den Stirnseiten der Elemente durch eine weitere Verbindungsfläche zu verhindern, sind an den Aussenseiten der äusseren Isolationselemente 14 in Umfangsrichtung entlang der Stirnfläche verlaufende Klettverbindungen 23 ausgebildet. Um die Figuren übersichtlich zu halten, sind die in Umfangsrichtung verlaufenden Klettverbindungen 23 nur im Längsschnitt (Fig. 1) dargestellt. Die Klettverbindungen 23 umfassen ein Klettband 23a bzw. ein Flauschband auf der Aussenseite von äusseren Isolationselementen 14, bzw. Teilhüllen 20 um Silikatplattenelemente 19, und einen an der Aussenseite der in Achsrichtung anschliessenden äusseren Isolationselementen 14, bzw. Teilhüllen 20, befestigten Hüllenlappen 23b mit nach innen gerichtetem Klettband. Eine gute Abdichtung wird erzielt, wenn die Stirnseiten der äusseren Isolationselemente 14 dicht aneinander anliegen und insbesondere, wenn die Klettverbindungen 23 beispielsweise mit Silikonkitt abgedichtet werden.

Die äusserste Schicht der Wärmedämmung wird von an die Aussenseite der äusseren Isolationselemente 14 anschliessenden Formelementen 24 gebildet. Die Formelemente sind vorzugsweise halbzylindermantelförmig als an den Randbereichen formschlüssig aneinander anlegbare Bleche, insbesondere aus Peraluman 150, ausgebildet. Um die in Umfangsrichtung aneinander anschliessenden Formelemente 24 miteinander zu verbinden, sind Verbindungselemente, vorzugsweise Schnallen, vorgesehen. In den Überlappungsbereichen der Bleche sind Siecken und/oder Wülste 24a vorgesehen, so dass die Formelemente 24 eine im wesentlichen durchgehende Ausseschicht bilden, in der Durchtrittsöffnungen für die Anschlussleitungen 10 ausgebildet sind. Die Formelemente 24 liegen stirnseitig jeweils an den Silikatplattenelementen 19 auf. Die parallel zur Achse 3 verlaufenden Berandungen sind vorzugsweise zu den Berandungsflächen 17a, 17b der äusseren Isolationselemente versetzt, insbesonder um 90° verdreht, angeordnet.

Die Befüllung der Presselemente 9 erfolgt erst nach der vollständigen Montage aller Elemente der Wärmedämmung, so dass die dabei entstehende Presswirkung zwischen der Leitung 1 und den Formelementen 24 wirksam wird und entsprechend zum Komprimieren der inneren und der äusseren Isolationselemente 4, 14 führt. Die Presswirkung führt auch zum dichten aneinander Anliegen aller Anschlussflächen verschiedener Elemente und somit zum Verschwinden von durchgängigen Spalträumen und Hohlräumen in den Isolationselementen 4, 14.

Die Schichtdicken der inneren Isolationselemente, der Presselemente und der äusseren Isolationselemente müssen der jeweiligen Anwendung entsprechend so gewählt werden, dass die bei der jeweiligen Schicht auftretenden Temperaturen die maximal zulässigen Temperaturen für die verwendeten Materialien nicht übersteigen. Dabei ist insbesondere für mit PUR-Schaum befüllte Presselemente zu berücksichtigen, dass diese nicht Temperaturen über 120°C ausgesetzt werden sollten. Zudem muss die Temperatur an der zugänglichen Aussenseite der Wärmedämmung zur Gewährleistung eines Handschutzes unterhalb von 60°C liegen. Unnötig grosse Schichtdicken sollten aus wirtschaftlichen Gründen vermieden werden. Für ein Medium, das mit einer Temperatur von 300°C durch eine Chromstahl-Leitung mit einer Wandstärke von 4.5mm gefördert wird, sollen die inneren Isolationselemente Silikatfasermatten mit einem spezifischen Gewicht von 128kg/m³ und einer Schichtdicke von 69mm, die Presselemente eine PUR-Schaumschicht der Dicke 20mm und die äusseren Isolationselemente Silikatfasermatten mit einem spezifischen Gewicht von 128kg/m³ und einer Schichtdicke von 19mm haben. Die Umgebungstemperatur soll 25°C betragen. Bei dieser Dimensionierung ergibt eine Berechnung Temperaturen von zirka 105°C nach der innersten Schicht, 65°C nach der PUR-Schaumschicht und 37°C nach den äusseren Isolatioselementen. Der berechnete Wärmeverlust pro Meter Leitungslänge beträgt dann lediglich 72W. Zur Kontrolle von Schwadensicherheitsnormen einer Wärmedämmung gemäss fig. 1-3 mit den oben angeführten Schichtdicken wurde ein mit Silikonöl gefülltes Leitungsrohr mit einem Heizstab auf ca 305°C erhitzt und nach dem Ausschalten des Heizstabes das Abkühlverhalten über eine Stunde beobachtet. Die erzielten mittleren Abkühltemperaturen während einer Stunde lagen im Bereich von 15-19°C und somit unterhalb der für Elektroinstallationen genannten 20°C. Die erfindungsgemässe Wärmedämmung kann somit die strengen Schwadensicherheitsnormen für Elektroinstallationen erfüllen.

Die erfindungsgemässe Wärmedämmung ist nicht auf die Ummantelung von geraden Rohren eingeschränkt, sondern sie kann auch bei komplizierten Oberflächen, insbesondere Rohrkrümmungen, Rohrabzweigungen und Apparateoberflächen mit komplizierten Formen eingesetzt werden, indem die Aufteilung in und die Gestaltung der Isolations-, Press- und Formelemente an die jeweiligen Bauteile angepasst wird. Die im wesentlichen parallel zur Oberfläche verlaufenden Schichten der Elemente, nämlich die Innen und Aussenhäute der Hüllen, die Formelemente und insbesondere auch die Schichten aus Isoliermaterial, sind aus Teilen von flächigen Materialbahnen hergestellt. Es handelt sich also grundsätzlich um zweidimensionale Teile, die erst durch das Zusammennähen, im Falle der Formelemente gegebenenfalls durch Rollenschweissen, oder im Falle des Isoliermateriales durch das gestossene Einfüllen in die Hülle, zu einer Schicht mit dreidimensionaler Form führen. Die flächigen Teile müssen als Zuschnitte so gewählt werden, dass die daraus zusammengestellten Schichten eine im wesentlichen exakt an das Bauteil angepasste Form erhalten. Da der Glasfaserstoff beweglich, bzw. weich ist, können kleinere Abweichungen von der gewünschten Form durch Verformungen aufgrund der von den Presselementen ausgehenden Presskräfte kompensiert werden. Entsprechend liegt die Innenhaut der inneren Isolationselemente im wesentlichen vollständig auf der Bauteiloberfläche auf, auch wenn die Zuschnitte lediglich zweidimensionale Annäherungen an die effektiven Krümmungen mit beliebigen Krümmungsänderungen sind. Das genaue bzw. wulstfreie Anliegen verhindert das Entstehen von Freiräumen. Bei flachen nicht an die Aussenfläche des jeweiligen Bauteiles angepassten Kissen treten Wülste auf, die gegebenenfalls zu Nestern führen können. Zur Bildung von Hüllen müssen rippenförmige Schmalseiten entsprechend der Oberflächenkrümmung mit einer der Hüllendicke entsprechenden Breite zugeschnitten und verbindend zwischen die Innen- und die Aussenfläche eingesetzt werden. Bei den Verbindungen von aneinander anliegenden Isolationselementen und von Presselementen ist es ebenfalls wichtig, dass keine Durchtrittskanäle offen bleiben, was mit der Verwendung von Klettverbindungen linienförmig, bzw. streifenförmig entlang der Berandung der Elemente erzielbar ist.

Zum Festlegen von zu verwendenden Zuschnitt-Teilen muss nach minimalen Abweichungs-Kriterien eine Ähnlichkeitsfläche aus zweidimensionalen Teilflächen bestimmt werden, deren Abweichungen kleiner als maximal zulässig sind. Für die direkt anliegende Hüllenhaut eines inneren Isolationselementes werden ausgehend von der Form der Aussenfläche des Bauteiles zweidimensionale Abwicklungen bzw. Zuschnitt-Teile mit den jeweils benötigten Naht-Zugaben bestimmt, zugeschnitten und zur gewünschten Schicht verbunden. Die Aussenhaut und analog auch die Innen- und die Aussenhaut eines zugeordneten Presselementes, sowie die Innen- und Aussenhaut eines zugeordneten äusseren Isolationselementes, wird an eine Fläche angenähert, die um eine gewünschte Schichtdicke von der Aussenfläche des Bauteils beabstandet ist. Die Zuschnitt-Teile der Schichten aus Isoliermaterial sind vorzugsweise an eine Fläche angenähert, die zwischen der Innen- und der Aussenhaut verläuft. Auch die Teilflächen der Formelemente werden analog entsprechend ihrem Abstand zur Oberfläche bestimmt und miteinander verbunden.

Die erfindungsgemässen Wärmedämmung ist nicht auf den Einsatz in explosinsgefährdeten Innenräumen beschränkt, sondern kann beispielsweise auch bei Wechseltemperaturanwendungen vorteilhaft eingesetzt werden, indem sie etwa einen genügend weit aussen liegenden Taupunkt gewährleistet. Das heisst, dass bei Leitungen durch die abwechselnd Heissdampf und Wasser, insbesondere Kühlwasser, geführt wird, die Bildung von Kondenswasser in der Wärmedämmung, insbesondere an der Leitung, im wesentlichen verhindert werden kann.

## Patentansprüche

1. Explosionsschutz-Wämedämmung für Wärmequellen und Wärme-Übertragungsleitungen (1) in Raumbereichen mit explosionsfähigen Gasgemischen, mit an die zu isolierende Oberfläche angrenzenden, aneinander anschliessenden inneren Isolationselementen (4) und auf der von der Oberfläche abgewendeten Seite der inneren Isolationselemente (4) im wesentlichen in fester Lage zur Oberfläche angeordneten Formelementen (24), **dadurch gekennzeichnet, dass** die inneren Isolationselemente (4) eine innere Hülle (5) und in der inneren Hülle (5) Isoliermaterial (6) umfassen und dass zwischen den inneren Isolationselementen (4) und den Formelementen (24) befüllbare, hüllenförmige Presselemente (9) angeordnet sind, welche durch die Befüllung in der montierten Lage eine Verdrängung von Freiräumen und ein Komprimieren des Isoliermaterials (6) der inneren Isolationselemente (4) erzielbar machen.

2. Explosionsschutz-Wämedämmung nach Anspruch 1, dadurch gekennzeichnet, dass zwischen den Presselementen (9) und den Formelementen (24) äussere Isolationselemente (14) angeordnet sind, die eine äussere Hülle (15) und darin Isoliermaterial (16) umfassen, wobei auch das Isoliermaterial (16) der äusseren Isolationselemente (14) von den Presselementen (9) komprimierbar ist.

3. Explosionsschutz-Wämedämmung nach Anspruch 2, dadurch gekennzeichnet, dass Silikatplattenelemente (19) radial zwischen Anlegebereichen (21) der inneren Isolationselemente (4) und den Formelementen (24) und stirnseitig zwischen Presselementen (9) angeordnet sind und dabei als Distanzhalter den Raum für die Presselemente (9) vor dem Befüllen freihalten, wobei die Silikatplattenelemente (19) vorzugsweise an zwei einander gegenüberliegenden Stirnseiten der äusseren Isolationselemente (14), vorzugsweise in Hüllenteilen (20) derselben, angeordnet sind und insbesondere quer zu den Stirnflächen an Anschlägen (22) der inneren Isolationselemente (4) anliegen.

4. Explosionsschutz-Wämedämmung nach einem der Ansprüche 1 bis 3, dadurch gekennzeichnet, dass die innere Hülle (5) aus Glasfaserstoff besteht und zumindest der an die zu isolierende Oberfläche angrenzende Bereich der inneren Hülle (5), vorzugsweise aber die gesamte innere Hülle (5), mit Metalldraht, insbesondere V4A-Draht, verstärkt bzw. durchwoben ist und/oder das Isoliermaterial (6) schichtförmig, insbesondere aus Silikatfasermatten hergestellt, ist.

5. Explosionsschutz-Wämedämmung nach einem der Ansprüche 1 bis 4, dadurch gekennzeichnet, dass die äusseren Hüllen (15) aus Glasfaserstoff gebildet sind und zumindest die gegen die Formelemente (24) gerichteten Bereiche der äusseren Hüllen (15), gegebenenfalls aber die gesamten äusseren Hüllen (15), zumindest einseitig, vorzugsweise aber zweiseitig, mit Silikon beschichtet sind.

6. Explosionsschutz-Wämedämmung nach einem der Ansprüche 1 bis 5, dadurch gekennzeichnet, dass die Formelemente (24) als an den Randbereichen formschlüssig aneinander anlegbare Bleche, vorzugsweise aus Peraluman 150, ausgebildet sind.

7. Explosionsschutz-Wämedämmung nach einem der Ansprüche 1 bis 6, dadurch gekennzeichnet, dass die Presselemente (9) aus silikonisiertem Glasfaserstoff gebildet sind und in diese ein sich bei der Verfestigung ausdehnendes Mittel, vorzugsweise ein Schaum, insbesondere PUR-Schaum (11), oder ein druckbeaufschlagtes Fluid, vorzugsweise ein Gas, insbesondere Stickstoff, eingefüllt ist.

8. Explosionsschutz-Wämedämmung nach einem der Ansprüche 1 bis 7, dadurch gekennzeichnet, dass aneinander angrenzende Berandungen von Isolationselementen (4, 14) und von Presselementen (9) mit Klettverbindungen (8, 18, 13), die gegebenenfalls mit Silikonkitt abgedichtet sind, verbunden sind, wobei von den paarweise zusammenwirkenden Klettflächen jeweils eine nach aussen gerichtete Klettfläche (8a, 18a, 13a) an der Aussenseite bei der einen Berandung und eine nach innen gerichtete an einem über die andere Berandung vorstehenden Verbindungslappen (8b, 18b, 13b) befestigt, bzw. damit vernäht ist.

9. Explosionsschutz-Wämedämmung nach einem der Ansprüche 1 bis 8, dadurch gekennzeichnet, dass aneinander angrenzende Berandungen der Isolationselemente (4, 14), der Presselemente (9) und der Formelemente (24) schichtweise zueinander versetzt bzw. verdreht sind und/oder die inneren Isolationselemente (4) zumindest in einer Richtung stufenförmig aneinander angepasst sind.

10. Explosionsschutz-Wämedämmung nach einem der Ansprüche 1 bis 9, dadurch gekennzeichnet, dass
a) die inneren Isolationselemente (4) zylindermantelförmig mit einer in Längsrichtung durchgehenden Unterbrechung und vorzugsweise einer Klettverbindung (8) ausgebildet sind, so dass sie über einen Rohrabschnitt stülpbar und mit der Klettverbindung (8) entlang der Unterbrechung verschliessbar sind,
b) die inneren Isolationselemente (4) stirnseitig in radialer Richtung so abgestuft sind, dass zwei aneinander anschliessende Elemente formschlüssig ineinander passen, wobei vorzugsweise radial aussen im Verbindungsbereich eine ringförmige Nut (21) frei bleibt, die zur Aufnahme von je zwei Paaren, insbesondere zu äusseren Isolationselementen (14) gehörenden, halbringförmiger Silikatplattenelemente (19) ausgebildet ist,
c) die befüllbaren Presselemente (9) zylindermantelförmig mit einer in Längsrichtung durchgehenden Unterbrechung, vorzugsweise einer Klettverbindung (13) und mindestens einer insbesondere aber zwei radial nach aussen führenden Anschlussleitungen (10) ausgebildet sind, so dass sie über ein inneres Isolationselement (4) stülpbar und mit der Klettverbindung (13) entlang der Unterbrechung verschliessbar sind, wobei die Klettverschlüsse (8, 13) des inneren Isolationselementes (4) und des Presselementes (9) vorzugsweise gegeneinander versetzt, bzw. verdreht angeordnet sind,
d) die äusseren Isolationselemente (14) halbzylindermantelförmig ausgebildet, mit stirnseitig angeordneten halbringförmigen Silikatplattenelementen (19) versehen, paarweise um die befüllbaren Presselemente (9) angeordnet und mit Klettverbindungen (18) miteinander verbunden sind, wobei in je einem äusseren Isolationselement (14) mindestens eine vorzugsweise aber zwei Durchführungen für Anschlussleitungen (10) der Presselemente (9) ausgebildet ist bzw. sind, und
e) die Formelemente (24) halbzylindermantelförmig ausgebildet, paarweise um die äusseren Isolationselement (14) angeordnet und mit einer Verbindungsvorrichtung, insbesondere mit Schnallen, verbindbar sind, wobei in je einem Formelement (24) mindestens eine vorzugsweise aber zwei Durchführungen für Anschlussleitungen (10) der Presselemente (9) ausgebildet ist bzw. sind.
